# EUROPÄISCHE PATENTANMELDUNG

(11) **EP 1 300 794 A2**
(43) Veröffentlichungstag der Anmeldung: **09.04.2003**
(21) Anmeldenummer: 02360274.1
(22) Anmeldetag: 25.09.2002
(51) Int. Cl.: G06F 17/60

(54) **Kontroll-Server zur Unterstützung der Vergebührung von Diensten**

(30) Priorität: 04.10.2001 DE 10149160
(71) Anmelder: ALCATEL, 75008 Paris (FR)
(72) Erfinder: Hörmann, Thomas, 71723 Grossbottwar (DE); Prinz, Nicholas, 70176 Stuttgart (DE)
(74) Vertreter: Brose, Gerhard

(57) **Zusammenfassung**

Die Erfindung betrifft ein Verfahren und einen Kontroll-Server zur Unterstützung der Vergebührung von Diensten, die einem Dienstnutzer von einem Dienst-Server erbracht werden. Eine Dienst-Anforderungsnachricht zur Anforderung eines Dienstes von einem Endgerät des Dienstnutzers wird über ein Kommunikationsnetz zu dem Dienst-Server übermittelt. Die Dienst-Anforderungsnachricht und eine oder mehrere auf die Dienst-Anforderungsnachricht ergehenden Rückantworten des Dienst-Servers (SS1) werden über einen Kontroll-Server (CC1, CC2) geleitet. Der Kontroll-Server (CC1) führt eine Prozedur zur Authentisierung des Dienst-Nutzers durch und bestimmt mittels dem Ergebnis der Prozedur, ob die Vergebührung von Diensten, die von dem Dienst-Nutzer angefordert werden, von dem Kontroll-Server unterstützt wird oder nicht unterstützt wird. Der Kontroll-Server (CC1) überprüft, ob die Rückantwort des Dienst-Servers (SS1) eine Kennung (PT) beinhaltet, die den angeforderten Dienst als gebührenpflichtig klassifiziert. Der Kontroll-Server (CC1) unterbindet die Erbringung des angeforderten Dienstes, wenn der angeforderte Dienst als gebührenpflichtig klassifiziert ist und der Kontroll-Server nicht bestimmt hat, daß er die Vergebührung von Diensten unterstützt, die von dem Dienst-Nutzer angefordert werden.

## Beschreibung

Die Erfindung betrifft ein Verfahren und einen Kontroll-Server zur Unterstützung der Vergebührung von Diensten, die einem Dienstnutzer von einem Dienst-Server erbracht werden. Bei einem derartigen Verfahren wird eine Dienst-Anforderungsnachricht zur Anforderung eines Dienstes von einem Endgerät des Dienstnutzers über ein Kommunikationsnetz zu dem Dienst-Server übermittelt.

Insbesondere im Bereich der im Internet angebotenen Dienste besteht das Problem, auf welche Art und Weise der Nutzer eines Dienstes für die Dienst-Nutzung vergebührt werden kann. Die Erfindung geht von den im Folgenden beschriebenen Verfahren zur Vergebührung von Diensten aus, die einem Dienstnutzer über das Internet angeboten werden.

Der sogenannte NET900 Dienst verwendet einen besonderen Einwählknoten in das Internet, um den Dienstnutzer für die Nutzung von Informationen zu vergebühren, auf die er über das Internet zugreift. Ein Dienstnutzer kann nur bei Einwahl über diesen Einwählknoten, dem eine spezielle Telefonnummer zugeordnet ist, auf diesen Dienst zugreifen. Eine Verbindung zu diesem Einwählknoten wird von dem Vergebührungssystem des Fernsprechnetzes höher vergebührt, als die zu einem "normalen" Einwählknoten.

Der Nachteil eines derartigen Verfahrens besteht darin, daß es nur bei einem Internetzugang mittels ISDN (= Integrated Services Digital Network) oder Modem anwendbar ist.

Weitere Lösungen bestehen darin, spezielle Software-Module auf dem Endgerät des Dienstnutzers und dem Server des Dienstanbieters zu installieren, die eine Bezahlung von Diensten mittels "elektronischem Geld" ermöglichen. Das Software-Modul im Endgerät kann mit "elektronischen Geld" aufgeladen werden, das dann zur Bezahlung von Diensten verwendet wird.

Diese Lösungen haben den Nachteil, daß sie die Verwendung spezieller Endgeräte erfordern und nur im pre-paid Bereich anwendbar sind.

Der Erfindung liegt nun die Aufgabe zugrunde, eine benutzerfreundliche Vergebührung von Diensten zu ermöglichen und hierbei den technischen Aufwand möglichst gering zu halten.

Diese Aufgabe wird gelöst durch ein Verfahren zur Unterstützung der Vergebührung von Diensten nach der Lehre von Anspruch 1 und einen Kontroll-Server zur Unterstützung der Vergebührung von Diensten nach der Lehre von Anspruch 8.

Ein Dienst kann hierbei beispielsweise in der Lieferung von Informationen, Daten oder Software, aber auch in dem Verkauf von "gegenständlichen" Waren bestehen.

Die Erfindung hat den Vorteil, daß im Endgerätebereich keine spezielle Hard- oder Software benötigt wird. Sie ist somit besonders kostengünstig und benutzerfreundlich.

Weiter ist der gesamte Vergebührungsvorgang für Dienstnutzer und Dienst-Server transparent. Bestehende Vergebührungssysteme können in einfacher Weise eingebunden werden. Damit ist der technische Aufwand zur Einführung der Erfindung in bestehende Systeme auch sehr gering.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Systems mit mehreren Dienst-Nutzern, mehreren Dienst-Servern und zwei erfindungsgemäßen Kontroll-Servern.
- Fig. 2: zeigt eine funktionelle Darstellung eines erfindungsgemäßen Kontroll-Servers nach Fig. 1.
- Fig. 3: zeigt ein erstes Ablaufdiagramm der Kommunikation zwischen einem Endgerät und einem Dienst-Server.
- Fig. 4: zeigt ein zweites Ablaufdiagramm der Kommunikation zwischen einem Endgerät und einem Dienst-Server.
- Fig. 5: zeigt ein drittes Ablaufdiagramm der Kommunikation zwischen einem Endgerät und einem Dienst-Server.
- Fig. 6: zeigt ein viertes Ablaufdiagramm der Kommunikation zwischen einem Endgerät und einem Dienst-Server.

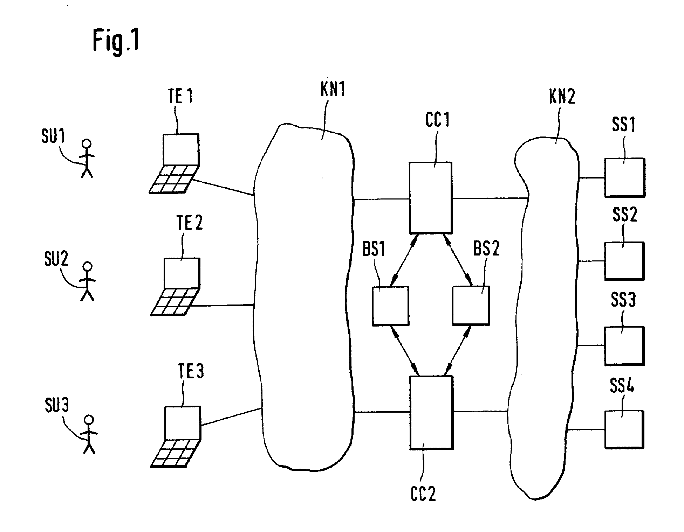

Fig. 1 zeigt zwei Kommunikationsnetze KN1 und KN2, drei Dienst-Nutzer SU1 bis SU3, denen Endgeräte TE1, TE2, bzw. TE3 zugeordnet sind, zwei Kontroll-Server CC1 und CC2, zwei Vergebührungssysteme BS1 und BS2 und vier Dienst-Server SS1 bis SS3.

Bei den Kommunikationsnetzen KN1 und KN2 handelt es sich um das Internet, also um ein Kommunikationsnetz, das als Level 3 Protokoll das IP Protokoll (IP = Internet Protokoll) verwendet. Die Kommunikationsnetze KN1 und KN2 können jedoch auch von verschiedenartigen Kommunikationsnetzen gebildet werden.

Das Kommunikationsnetz KN1 kann beispielsweise von einem Datennetz gebildet werden, das sich selbst aus unterschiedlichen Teilnetzen zusammensetzt. Solche Teilnetze können beispielsweise unterschiedlichen Netzbetreibern zugeordnet sein. Solche Teilnetze können auch Mobilfunknetze sein, bei denen die Kommunikation beispielsweise auf dem DECT, GSM, UMTS oder Bluetooth Standard (DECT = Digital European Cordless Telecommunication, GSM = Global System for Mobile Communication, UMTS = Universal Mobile Telecommunications System) basiert. Solche Teilnetze können auch von Fernsprechnetzen gebildet werden (Datenübertragung mittels Modem oder ISDN). Bei dem Kommunikationsnetz KN1 kann es sich aber auch insgesamt um ein Fernsprechnetz handeln.

Das Kommunikationsnetz KN2 kann beispielsweise von einem Datennetz gebildet werden, das auf einem LAN Protokoll (LAN = Local Area Network) basiert. Auch hier besteht die prinzipielle Möglichkeit, daß es sich bei dem Kommunikationsnetz KN2 um ein Fernsprechnetz handelt.

Die Dienst-Server SS1 bis SS4 werden jeweils von einem oder von mehreren miteinander verbundenen Rechnern und von der auf diesen Rechnern ablaufenden Software gebildet. Die Dienst-Server SS1 bis SS4 stellen den Dienst-Nutzern SU1 bis SU3 jeweils ein oder mehrere Dienste bereit. Die von den Dienst-Servern SS1 bis SS4 bereitgestellten Dienste können hierbei unterschiedlicher Natur sein: Beispielsweise die Lieferung von Informationen, Daten, Programmen, die benutzergesteuerte Filterung von Informationen oder den Verkauf von Waren und Dienstleistungen.

Die Dienst-Nutzer SU1 bis SU3 greifen auf die Dienst-Server SS1 bis SS4 mittels des Internets zu. Es ist jedoch auch möglich, daß die Dienst-Nutzer auf die Dienst-Server SS1 bis SS4 mittels WAP (Wireless Application Protocol) oder mittels eines Fernsprechendgerätes zugreifen. Je nach Art des Zugriff erbringen die Dienst-Server SS1 bis SS4 somit die Funktion eines WEB-Servers, WAP-Servers oder IN-Servers (IN = Intelligent Network, SCP (Service Control Point) und sind technisch entsprechend ausgestattet.

Bei den Endgeräten TE1 bis TE3 handelt es sich Computer, die mit Hard- und Softwarekomponenten für die Kommunikation über das Kommunikationsnetz KN1 ausgestattet sind. Die Endgeräte TE1 bis TE3 verfügen somit auch über einen WEB Browser, mittels dem sie auf die von den Dienst-Servern SS1 bis SS4 bereitgestellten Dienste zugreifen. Es ist auch möglich, daß es sich bei den Endgeräten TE1 bis TE3 um WAP Endgeräte, um UMTS Endgeräte oder um ganz normale Fernsprechendgeräte handelt.

Die Kontroll-Server CC1 und CC2 dienen der Unterstützung der Vergebührung von Diensten, die den Dienstnutzern SU1 bis SU3 von den Dienst-Servern SS1 bis SS4 erbracht werden. Es ist hierbei zum einen möglich, daß die Kontroll-Server CC1 und CC2 jeweils einer bestimmten Gruppe von Dienst-Nutzern zugeordnet sind. Der Kontroll-Server CC1 bearbeite beispielsweise alle Dienst-Anforderungen der Teilnehmer eines bestimmten Netzbetreibers oder Internet-Zugangsbetreibers. Es ist andererseits möglich, daß die Kontroll-Server CC1 und CC2 jeweils einem oder mehreren Dienst-Servern zugeordnet sind. Der Kontroll-Server CC2 bearbeitet beispielsweise alle Dienstanforderungen, die an Dienste eines bestimmten Dienst-Betreibers gerichtet sind.

Dienst-Server und Kontroll-Server können hierbei auch logische Funktionsblöcke darstellen, die von auf derselben Hardware-Plattform ablaufenden Applikations-Programmen implementiert werden.

Die Vergebührungssysteme BS1 und BS2 stellen Systeme dar, mittels denen Gebühren für die Nutzung von Telekommunikationsdiensten Dienst-Nutzern in Rechnung gestellt werden. Die Vergebührungssysteme BS1 und BS2 können hierbei einen im Voraus eingezahlten Geldbetrag um die jeweils anfallenden Gebühren verringern (pre-paid). Eine weitere Möglichkeit besteht darin, daß sie die in einem bestimmten Zeitraum anfallenden Gebühren addieren und dem Nutzer am Ende des Zeitraums in Rechnung stellen. Bei dem Vergebührungssystem BS1 kann es sich beispielsweise um das übliche Vergebührungssystem eines ersten Fernsprechbetreibers und bei dem Vergebührungssystem BS2 und das eines zweiten Fernsprechbetreibers handeln. Es kann sich aber bei den Vergebührungssystemen BS1 und BS2 jeweils auch um das Zahlungssystem einer Bank oder eines Kreditinstitutes handeln.

Zur Anforderung eines Dienstes sendet das Endgerät TE1 des Dienstnutzers SU1 eine Dienst-Anforderungsnachricht zu dem Dienst-Server SS1. Diese Dienstanforderungsnachricht kann beispielsweise aus einer HTTP/IP Nachricht (HTTP = Hypertext Transport Protocol) bestehen, die an die Internet-Adresse oder die WEB-Adresse des Dienst-Servers SS1 gerichtet ist. Es kann sich bei dieser Dienst-Anforderungsnachricht aber auch um eine Verbindungsanforderungsnachricht eines Fernsprechnetzes handeln, die einen von dem Dienst-Server SS1 bereitgestellten IN Dienst adressiert.

Die Dienst-Anforderungsnachricht wird über die Kommunikationsnetzen KN1 und KN2 und über den Kontroll-Server CC1 zu dem Dienst-Server SS1 übermittelt. Hierzu wird die Wegeleitung in den Kommunikationsnetzen KN1 und KN2 oder die Adressierung der von den Dienst-Servern SS1 bis SS4 bereitgestellten Dienste so gewählt, daß die Kommunikation zwischen den Endgeräten TE1 bis TE3 und dem Dienst-Server SS1 über den Kontroll-Server CC1 erfolgt. Die Dienst-Anforderungsnachricht und eine oder mehrere auf die Dienst-Anforderungsnachricht ergehende Rückantworten des Dienst-Servers SS1 werden damit über den Kontroll-Server CC1 geleitet.

Auf den Empfang der Dienst-Anforderungsnachricht des Endgerätes TE1 sendet der Dienst-Server SS1 eine Rückantwort an das Endgerät TE1. Diese Rückantwort kann bereits der Erbringung des Dienstes dienen. Es kann aber auch der Austausch mehrere Nachrichten zwischen dem Endgerät TE1 und dem Dienst-Server SERV erfolgen, bevor der Dienst von dem Dienst-Server SS1 erbracht wird.

Der Kontroll-Server CC1 überprüft, ob die Rückantwort des Dienst-Servers SS1 oder eine der Rückantworten des Dienst-Servers SS1 eine Kennung beinhaltet, die den angeforderten Dienst als gebührenpflichtig klassifiziert. Diese Kennung kann auch aus einem Merkmal im Antwortcode oder aus einem bestimmten Dateinamen bestehen.

Ist dies der Fall, so führt der Kontroll-Server CC1 eine Prozedur zur Authentisierung des Dienst-Nutzers durch und bestimmt mittels dem Ergebnis der Prozedur, ob die Vergebührung von Diensten, die von dem Dienst-Nutzer SU1 angefordert werden, von dem Kontroll-Server unterstützt wird oder nicht unterstützt wird. Es ist auch möglich, daß der Dienst-Server diese Prozedur unabhängig von der Rückantwort des Dienst-Servers durchführt. Weiter ist es möglich, daß der Dienst-Server diese Prozedur nur einmal bei der aufeinanderfolgenden Anforderungen von mehreren Diensten durchführt.

Die Prozedur zur Authentisierung des Dienst-Nutzers kann auch eine Autorisierungsprozedur, eine Vorab-Preisinformation an den Dienstnutzer oder eine explizite Kaufbestätigung durch den Dienstnutzer beinhalten.

Der Kontroll-Server CC1 unterbindet sodann die Erbringung des angeforderten Dienstes, wenn der angeforderte Dienst als gebührenpflichtig klassifiziert ist und der Kontroll-Server nicht bestimmt hat, daß er die Vergebührung von Diensten unterstützt, die von dem Dienst-Nutzer angefordert werden. Der Kontroll-Server CC1 kann hierbei beispielsweise die Erbringung des angeforderten Dienstes unterbinden, indem er Rückantworten des Dienst-Servers SS1 nicht an das Endgerät TE1 weiterleitet oder Nachrichten des Endgerätes TE1 nicht an den Dienst-Server SS1 weiterleitet. Anstelle der Nicht-Weiterleitung kann auch die Weiterleitung eines alternativen Inhalts stehen. Weiter kann er an den Dienst-Server SS1 auch eine spezielle Steuernachricht senden, die das Erbringen des Dienstes unterbindet. Dies kann auch durch eine entsprechende Manipulation einer an den Dienst-Server SS1 weitergeleiteten Nachricht geschehen.

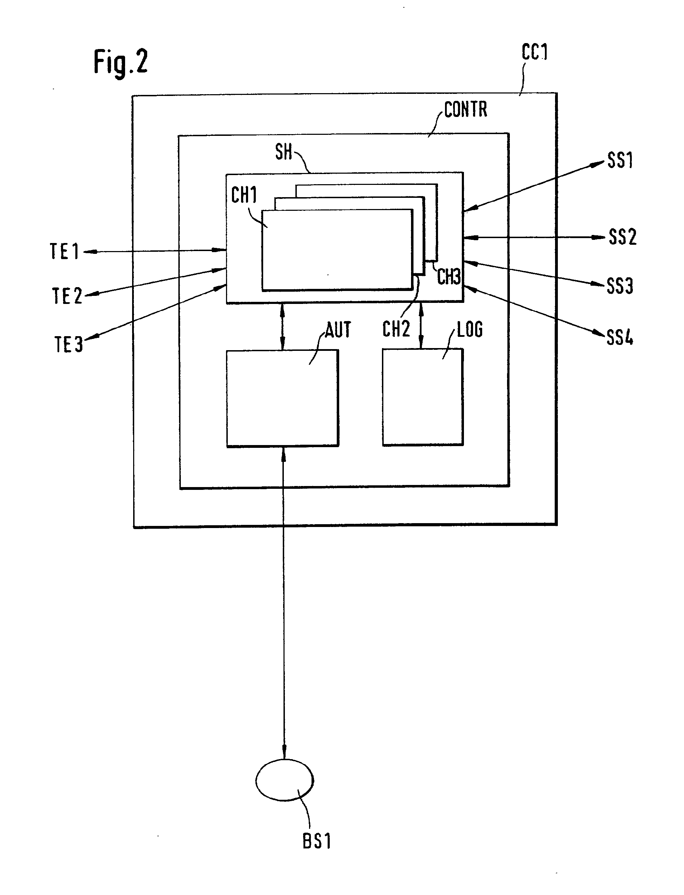

Im Folgenden wird nun anhand von Fig. 2 die detaillierte Funktionsweise des Kontroll-Servers CC1 erläutert.

Fig. 2 zeigt den Kontroll-Server CC1, der mit den Endgeräten TE1 bis TE3 und mit den Dienst-Servern SS1 bis SS4 und dem Vergebührungssystem BS1 kommuniziert.

Der Kontroll-Server CC1 weist ein oder mehrere miteinander verbundene Rechner und eine auf diesen Rechnern aufsetzende Software-Plattform auf. Auf dieser Softwareplattform setzen mehrere Applikationsprogramme auf. Bei der Ausführung dieser Applikationsprogramme auf der aus Hard- und Softwareplattform gebildeten Systemplattform des Kontroll-Servers CC1 wird der Kontroll-Server CC1 derart gesteuert, daß der Kontroll-Server CC1 die unten beschriebenen Funktion des Kontroll-Servers CC1 ausführt. Die Applikationsprogramme und die zum Ablauf der Applikationsprogramme notwendige Systemplattform bilden somit eine Steuereinheit CONTR, die derart ausgestaltet ist, daß sie die unten beschriebenen Funktionen des Kontroll-Servers CC1 ausführt.

Aus funktioneller Sicht weist die Steuereinheit CONTR drei Funktion SH, AUT und LOG auf.

Die Funktion AUT führt eine Prozedur zur Authentisierung von Dienst-Nutzern durch. Mittels dem Ergebnis der Prozedur bestimmt sie, ob die Vergebührung von Diensten, die von einem Dienst-Nutzer angefordert werden, von dem Kontroll-Server unterstützt wird oder nicht unterstützt wird.

Bei der Prozedur zur Authentisierung von Dienstnutzern fordert der Kontroll-Server beispielsweise eine Benutzerkennung, ein Passwort oder eine elektronische Unterschrift von dem Dienst-Nutzer an. Mittels dieser Daten überprüft die Funktion SH sodann, welcher Dienst-Nutzer den Dienst anfordert.

Der Kontroll-Server CC1 kann bei der Prozedur zur Authentisierung des Dienstnutzers auch die Autorisierung durch ein Vergebührungssystem überprüfen. Nur bei positiver Autorisierung bestimmen er, daß die Vergebührung von Diensten, die von dem Dienst-Nutzer angefordert werden, von dem Kontroll-Server unterstützt wird.

Die Authentisierung und Autorisierung des Dienstnutzers kann von der Steuereinheit CONTR allein oder mit Unterstützung des Vergebührungssystems BS1 erfolgen:

Daten zur Authentisierung des Dienstnutzers können lokal in dem Kontroll-Server CC1 gespeichert sein. Weiter können für den Dienst-Nutzer lokal in dem Kontroll-Server CC1 Daten gespeichert sein, die eine Autorisierung des Vergebührungssystems BS1 für gewisse Gebühren oder für eine gewisse Gebührenhöhe vorgeben. Auch eine generelle Autorisierung für alle von einem bestimmten Dienst-Nutzer verursachten Gebühren ist möglich. Diese Daten geben beispielsweise eine Art "pre-paid" Konto vor, das bei jedem Zahlungsvorgang verringert wird, oder bilden eine Art Kreditrahmen für Gebühren, die durch den Dienst-Nutzer verursacht werden. Die Funktion AUT überprüft mittels dieser Daten die Authentisierung des Dienstnutzers und ermittelt, ob für die jeweiligen Gebühren eine Autorisierung im Rahmen der lokal vorhandenen Informationen vorliegt. Ist der lokale Rahmen aufgebraucht, so wird auf das Vergebührungssystem BS1 zugegriffen. Dieses Vorgehen hat insbesondere bei geringen Gebühren den Vorteil, daß der Aufwand für die Vergebührung sehr gering ist und die Vergebührungskosten in einem vernünftigen Verhältnis zu den anfallenden Gebühren stehen.

Eine weitere Möglichkeit besteht darin, daß zur Überprüfung der Autorisierung der Vergebührung durch das Vergebührungssystem BS1 auf einen Server dieses Vergebührungssystems zugriffen wird. Dieser Server bestimmt anhand der übermittelten Daten in jedem Einzelfall, ob er einer Vergebührung zustimmt.

Die Funktion SH bearbeitet die von dem Kontroll-Server CC1 empfangenen Nachrichten, die von den Endgeräten TE1 bis TE3 und den Dienst-Servern SS1 bis SS4 stammen. Für jede Anforderung eines Dienstes durch eines der Endgeräte TE1 bis TE3, die über den Kontroll-Server CC1 geleitet wird, wird von der Funktion SH ein Prozeß gestartet, der die Bearbeitung der jeweilige Dienst-Sitzung durch den Kontroll-Server CC1 steuert. In Fig. 2 sind hier beispielhaft drei Prozesse CH1 bis CH3 gezeigt.

Der Prozeß CH1 wird auf den Empfang einer Dienstanforderungsnachricht gestartet und leitet die Dienstanforderungsnachricht an denjenigen Dienst-Server weiter, an den sie gerichtet ist. Er überprüft, ob die Rückantwort oder eine der Rückantworten des Dienst-Servers auf die Dienstanforderungsnachricht eine Kennung beinhaltet, die den angeforderten Dienst als gebührenpflichtig klassifiziert.

Weiter entscheidet der Prozeß CH1, ob und wann die Funktion AUT für diese Dienst-Sitzung durchgeführt wird: Die Bestimmung, ob die Vergebührung von Diensten, die von dem Dienst-Nutzer angefordert werden, von dem Kontroll-Server CC1 unterstützt wird oder nicht unterstützt wird, kann hierbei bei jeder Anforderung eines Dienstes erfolgen. Es ist jedoch auch möglich, daß diese Bestimmung für die Anforderung von zwei oder mehr Diensten gültig ist.

Der Prozeß CH1 kann bei positiver Autorisierung durch einen anderen Kontroll-Server, beispielsweise durch den Kontroll-Server CC2, auf die Durchführung der Funktion AUT verzichten und bestimmen, daß die Vergebührung von Diensten, die von dem Dienst-Nutzer angefordert werden, auch von dem Kontroll-Server CC1 unterstützt wird.

Der Prozeß CH1 unterbindet weiter die Erbringung des von dem Dienstnutzer angeforderten Dienstes, wenn der angeforderte Dienst als gebührenpflichtig klassifiziert ist und die Funktion AUT nicht bestimmt hat, daß der Kontroll-Server CC1 die Vergebührung von Diensten unterstützt, die von diesem Dienst-Nutzer angefordert werden.

Die Funktion LOG speichert Daten, die Auskunft über die von den einzelnen Dienstnutzern in Anspruch genommenen gebührenpflichtigen Dienste geben. Solche Daten betreffen insbesondere die Höhe dieser Gebühren. Die gespeicherten Daten werden in gewissen Abständen oder unmittelbar zur Verrechnung an das Vergebührungssystem BS1 übermittelt.

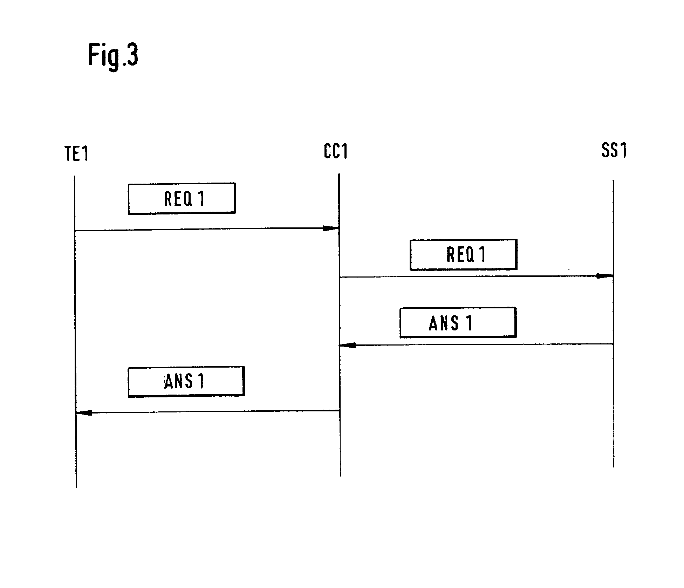

Die detaillierte Funktionsweise der Steuereinheit CONTR ergibt sich auch aus den in den Fig. 3 bis Fig. 6 beispielhaft dargestellten Verfahrensabläufen.

Fig. 3 verdeutlicht die Funktionsweise der Steuereinheit CONTR für den Fall, daß von dem Endgerät TE1 ein nicht gebührenpflichtiger Dienst angefordert wird.

Eine Dienstanforderungsnachricht REQ1, die beispielsweise die Anforderung einer bestimmten HTML Seite beinhaltet, wird von dem Endgerät TE1 an den Kontroll-Server CC1 übermittelt. Dieser leitet die Dienstanforderungsnachricht REQ1 unverändert an den Dienst-Server SS1 weiter. Der Dienst-Server SS1 übermittelt eine Rückantwort ANS1, die beispielsweise die angeforderte HTML Seite beinhaltet, an den Kontroll-Server CC1. Der Kontroll-Server CC1 überprüft die Rückantwort ANS1 und ermittelt, daß diese nicht als gebührenpflichtig klassifiziert ist. Deshalb leitet er die Rückantwort ANS1 unverändert an das Endgerät TE1 weiter.

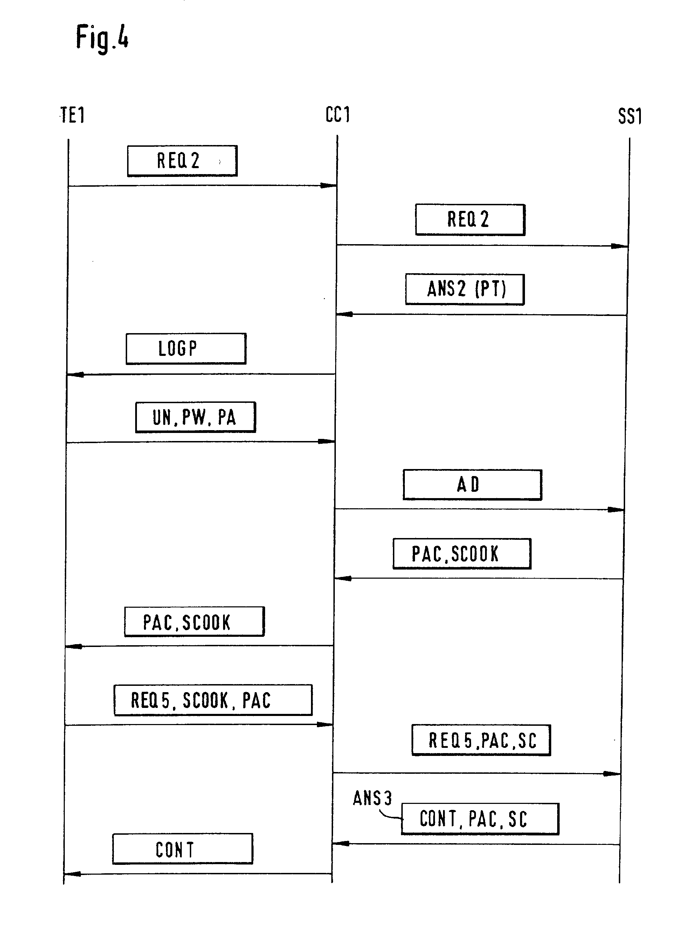

Fig. 4 zeigt die Funktionsweise der Steuereinheit CONTR für den Fall, daß von dem Endgerät TE1 ein gebührenpflichtiger Dienst angefordert wird.

Eine Dienstanforderungsnachricht REQ2, die beispielsweise die Anforderung einer bestimmten HTML Seite beinhaltet, wird von dem Endgerät TE1 an den Kontroll-Server CC1 übermittelt, der die Dienstanforderungsnachricht REQ2 unverändert an den Dienst-Server SS1 weiterleitet. Der Dienst-Server SS1 übermittelt eine Rückantwort ANS2(PT) an den Kontroll-Server CC1. Die Rückantwort ANS2(PT) beinhaltet eine Kennung PT, die den angeforderten Dienst als gebührenpflichtig klassifiziert. Die Kennung PT beinhalte darüber hinaus noch weitere Daten, die die Höhe der Gebühren angeben oder auf ein bestimmtes Vergebührungssystem hinweisen.

Der Kontroll-Server CC1 überprüft die Rückantwort ANS2(PT) und ermittelt, daß diese als gebührenpflichtig klassifiziert ist.

Da die Rückantwort ANS2(PT) die Kennung PT beinhaltet, die den angeforderten Dienst als gebührenpflichtig klassifiziert, führt der Kontroll-Server CC1 eine Prozedur zur Authentisierung von Dienst-Nutzern durch. Hierfür sendet er eine HTML Seite LOGP an das Endgerät TE1. Diese Seite fordert den Dienst-Nutzer SU1 auf, Daten zu seiner Authentisierung einzugeben und zu bestätigen, daß er diesen gebührenpflichtigen Dienst in Anspruch nehmen will.

Empfängt der Kontroll-Server CC1 hierauf einen Benutzernahmen UN, ein Passwort PW und eine Bestätigung PA, so überprüft er die Authentität des Dienstnutzers SU1 und die Autorisierung für die Vergebührung. Ist das Ergebnis der Authentisierung und Autorisierung positiv, so bestimmt er, daß die Vergebührung von Diensten, die von dem Dienst-Nutzer SU1 angefordert werden, von dem Kontroll-Server CC1 unterstützt wird und sendet eine Nachricht AD an den Dienst-Server SS1. Auf den Empfang der Nachricht AD ermittelt dieser einen Autorisierungscode PAC und ein Session-Cookie SCOOK und übermittelt beides an den Kontroll-Server CC1, der diese an das Endgerät TE1 übermittelt. Das Session-Cookie SCOOK beinhaltet hierbei einen Datensatz mit dienstnutzerspezifischen Daten.

Sowohl das Session-Cookie SCOOK als auch der Autorisierungscode PAC sind vorteilhafterweise mit einer bestimmten Verfallszeit versehen. Das Session-Cookie SCOOK ist beispielsweise mit einem Parameter versehen, der nach circa ½ Stunde die Löschung des Session-Cookies SCOOK aus dem Speicher des Endgerätes TE1 veranlaßt. Der Autorisierungscode PAC wird in dem Kontroll-Server CC1 zusammen mit dem Zeitpunkt abgespeichert, zu dem er generiert worden ist. Nach circa 1 Minute wird der Autorisierungscode dann ungültig.

Das Session-Cookie SCOOK kann beispielsweise folgende dienstnutzerspezifischen Daten enthalten: Sprache des Dienst-Nutzers, Währung, in der der Dienst-Nutzer zahlen will, Land, in dem sich der Dienst-Nutzer befindet, Betreiber des Dienst-Nutzers, Vergebührensschema des Dienst-Nutzers, Zeitpunkt, an dem das Session Cookie SCOOK ungültig wird, Kennung der Session, oder IP Adresse des Dienstes.

Natürlich können diese dienstnutzerspezifischen Daten auch auf andere Weise zwischen Dienst-Server SS1 und Endgerät TE1 kommuniziert werden.

Es ist auch möglich, daß der Autorisierungscode PAC und das Session-Cookie SCOOK direkt von dem Kontroll-Server SS1 ermittelt und an das Endgerät TE1 übermittelt werden.

Das Session-Cookie SCOOK wird von dem Endgerät TE1 abgespeichert. Das Endgerät TE1 wird sodann veranlaßt, eine neue Dienstanforderungsnachricht REQ5 an den Kontroll-Server CC1 zu übermitteln. Die Dienstanforderungsnachricht REQ5 beinhaltet hierbei den Autorisierungscode PAC und das Session-Cookie SCOOK.

Der Kontroll-Server erkennt das Session-Cookie SCOOK in der Dienstanforderungsnachricht REQ5, ermittelt einen zugeordneten Session Code SC und leitet die Dienstanforderungsnachricht REQ5 mit dem Sessioncode SC anstelle des Session-Cookies SCOOK an den Dienst-Server SS1 weiter. Der Dienst-Server SS1 sendet nun eine Rückantwort ANS3 über den Kontroll-Server CC1 an das Endgerät TE1. Die Rückantwort ANS3 enthält die angeforderte gebührenpflichtige WEB Seite CONT, den Autorisierungscode PAC und den Sessioncode SC.

Es ist vorteilhaft, den Sessioncode SC bereits mit dem Autorisierungscode PAC zu ermitteln und in dem Session-Cookie SCOOK an das Endgerät TE1 zu transportieren. Der Sessioncode SC kann aber auch in einer sonstigen Rückantwort an das Endgerät TE1 übermittelt werden.

Der Kontroll-Server CC1 überprüft nun die Rückantwort ANS3, ob der Sessioncode SC und der Autorisierungscode PAC korrekt sind.

Anhand des Sessioncodes SC erkennt der Kontroll-Server CC1, daß der von der Rückantwort ANS3 erbrachte Dienst gebührenpflichtig ist. Eine Rückantwort, die einen nicht gebührenpflichtigen Dienst erbringt, enthält keinen Sessioncode (siehe Ausführungsbeispiel zu Fig. 3).

Anhand der Überprüfung des Sessioncodes SC und des Autorisierungscodes PAC erkennt der Kontroll-Server CC1, ob der Kontroll-Server CC1 bestimmt hat, daß er die Vergebührung von Diensten des Dienst-Nutzers SU1 unterstützt. Ist der Autorisierungscode und der Sessioncode korrekt, so ist dies der Fall. Diese Überprüfung kann beispielsweise mittels einer Datenbank erfolgen, in der die gültigen Autorisierungscodes und die zugeordneten Sessioncodes abgespeichert sind.

Erkennt der Kontroll-Server CC1 so, daß der Dienst als gebührenpflichtig klassifiziert ist und der Kontroll-Server bestimmt hat, daß er die Vergebührung von Diensten des Dienst-Nutze SU1 unterstützt, so leitet er die Rückantwort ANS3 an das Endgerät TE1 weiter. Hierbei entfernt er den Sessioncode SC und den Autorisierungscode PAC aus der Rückantwort ANS3. Ist dies nicht der Fall, so unterbindet er die Erbringung des angeforderten Dienstes, indem er die Rückantwort ANS3 des Dienst-Servers SS1 nicht an das Endgerät TE1 weiterleitet.

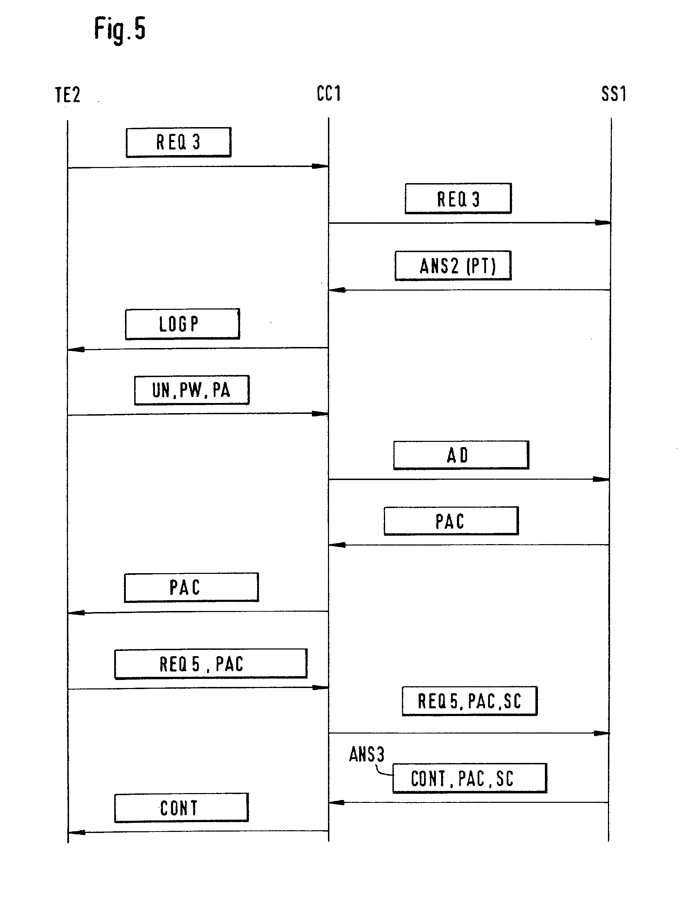

Fig. 5 zeigt ein alternatives Ausführungsbeispiel zu dem Ausführungsbeispiel nach Fig. 4 für den Fall, daß das Endgerät TE1 keine Cookies akzeptiert.

Das Ausführungsbeispiel nach Fig. 5 stimmt mit dem nach Fig. 4 bis auf folgende Unterschiede überein:

Eine Dienstanforderungsnachricht REQ3 von dem Endgerät TE2 wird über den Kontroll-Server CC1 zu dem Dienst-Server SS1 geleitet. Auf Seiten des Dienst-Servers SS1 wird kein Session-Cookie SCOOK generiert und der Autorisierungscode PAC wird ohne Session Cookie SCOOK zum Endgerät TE2 übermittelt. Es ist jedoch möglich, das der Sessioncode SC zum Endgerät übermittelt wird. Die Dienstanforderung REQ5 enthält kein Session Cookie COOK (deshalb können auch einige Dienstnutzerspezifische Daten nicht zwischen Endgerät TE2 und Kontroll-Server CC1 kommuniziert werden).

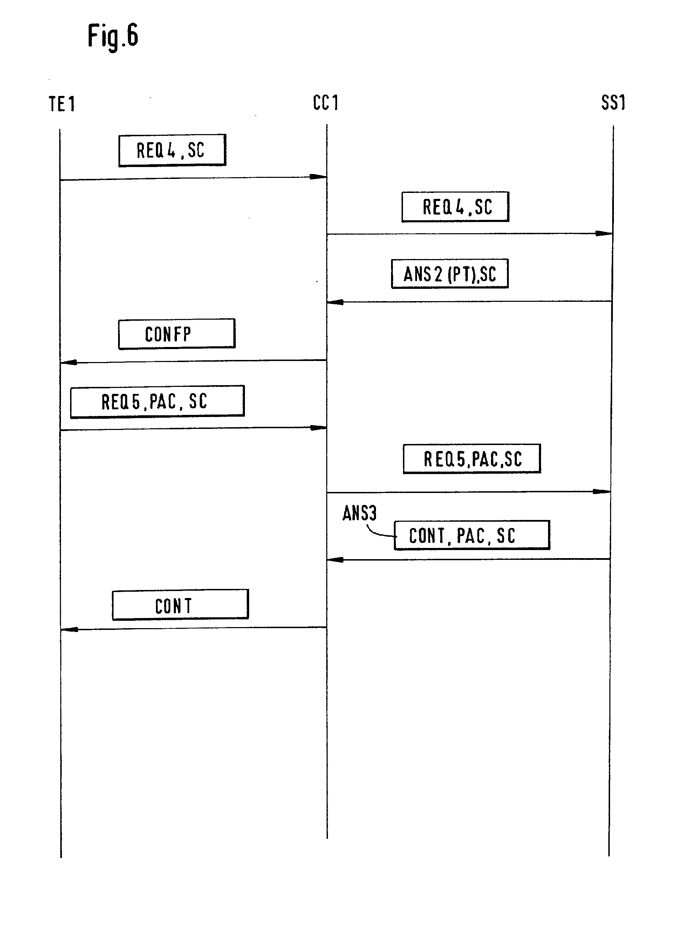

Fig. 6 verdeutlicht die Funktionsweise der Steuereinheit CONTR für den Fall, daß von dem Endgerät TE1 ein gebührenpflichtiger Dienst angefordert wird und daß bereits bei einer früheren Dienstanforderung ein Autorisierungscode PAC ermittelt und an das Endgerät TE1 übermittelt worden ist. Dies ist beispielsweise der Fall, wenn im Anschluß an das Ausführungsbeispiel nach Fig. 4 von dem Endgerät TE1 erneut ein Dienst des Dienst-Servers SS1 angefordert wird.

Eine Dienstanforderungsnachricht REQ4, die beispielsweise die Anforderung einer bestimmten HTML Seite beinhaltet, wird von dem Endgerät TE1 an den Kontroll-Server CC1 übermittelt. der die Dienstanforderungsnachricht REQ2 unverändert an den Dienst-Server SS1 weiterleitet. Die Dienstanforderungsnachricht REQ4 enthält hierbei den Sessioncode SC, der dem Endgerät bei einer frühren Anforderung eines gebührenpflichtigen Dienstes übermittelt worden ist. Der Dienst-Server SS1 übermittelt eine Rückantwort ANS2(PT) an den Kontroll-Server CC1. Die Rückantwort ANS2(PT) beinhaltet die Kennung PT, die den angeforderten Dienst als gebührenpflichtig klassifiziert. Weiter beinhaltet die Rückantwort ANS2(PT) den Session Code SC.

Der Kontroll-Server CC1 überprüft die Rückantwort ANS2(PT) und ermittelt, daß diese als gebührenpflichtig klassifiziert ist. Weiter ermittelt sie, daß die Rückantwort ANS2(PT) einen gültigen Sessioncode SC enthält.

Da die Rückantwort ANS2(PT) die Kennung PT beinhaltet, die den angeforderten Dienst als gebührenpflichtig klassifiziert, und die Rückantwort einen gültigen Sessioncode SC enthält, führt der Kontroll-Server CC1 keine Prozedur zur Authentisierung von Dienst-Nutzern durch. Vielmehr sendet sie eine HTML Seite CONFP an das Endgerät TE1. Diese Seite fordert den Dienst-Nutzer SU1 auf zu bestätigen, daß er diesen gebührenpflichtigen Dienst in Anspruch nehmen will. Auf das Senden der Seite CONFP könnte natürlich auch verzichtet werden.

Die Prozedur zur Authentisierung von Dienst-Nutzern wird somit nicht durchführt, wenn die Rückantwort eines Dienst-Servers auf eine Dienstanforderungsnachricht einen gültigen Sessioncode enthält.

Ist der Dienst-Nutzer SU1 mit der Anforderung des gebührenpflichtigen Dienstes einverstanden, so wird die Anforderungsnachricht REQ5 mit dem Autorisierungscode PAC und dem Sessioncode SC an den Kontroll-Server CC1 gesendet. Das Senden dieser Nachricht und die Verwaltung des Sessioncodes SC und des Autorisierungscodes PAC kann hierbei von dem Session-Cookie SCOOK unterstützt werden, das ja in dem Endgerät TE1 gespeichert ist.

Die Anforderungsnachricht REQ5 wird von dem Kontroll-Server CC1 zu dem Dienst-Server SS1 weitergeleitet, der daraufhin eine Rückantwort ANS3 an den Kontroll-Server CC1 sendet. Die Rückantwort ANS3 wird von dem Kontroll-Server CC1 wie die Rückantwort ANS3 nach Fig. 4 behandelt.

## Patentansprüche

1. Verfahren zur Unterstützung der Vergebührung von Diensten, die einem Dienstnutzer (SU1 bis SU3) von einem Dienst-Server (SS1 bis SS4) erbracht werden, wobei bei dem Verfahren eine Dienst-Anforderungsnachricht (REQ1 bis REQ4) zur Anforderung eines Dienstes von einem Endgerät (TE1 bis TE3) des Dienstnutzers (SU1 bis SU3) über ein Kommunikationsnetz (KN1, KN2) zu dem Dienst-Server (SS1 bis SS4) übermittelt wird,
**dadurch gekennzeichnet, daß** die Dienst-Anforderungsnachricht (REQ1 bis REQ4) und eine oder mehrere auf die Dienst-Anforderungsnachricht ergehenden Rückantworten (ANS1 bis ANS3) des Dienst-Servers (SS1) über einen Kontroll-Server (CC1, CC2) geleitet werden, daß der Kontroll-Server (CC1) eine Prozedur zur Authentisierung des Dienst-Nutzers durchführt und mittels dem Ergebnis der Prozedur bestimmt, ob die Vergebührung von Diensten, die von dem Dienst-Nutzer angefordert werden, von dem Kontroll-Server unterstützt wird oder nicht unterstützt wird, daß der Kontroll-Server (CC1) überprüft, ob die Rückantwort (ANS1 bis ANS3) des Dienst-Servers (SS1) eine Kennung (PT) beinhaltet, die den angeforderten Dienst als gebührenpflichtig klassifiziert, und daß der Kontroll-Server (CC1) die Erbringung des angeforderten Dienstes unterbindet, wenn der angeforderte Dienst als gebührenpflichtig klassifiziert ist und der Kontroll-Server nicht bestimmt hat, daß er die Vergebührung von Diensten unterstützt, die von dem Dienst-Nutzer angefordert werden.

2. Verfahren nach Anspruch 1, **dadurch gekennzeichnet, daß** der Kontroll-Server (CC1, CC2) bei der Prozedur zur Authentisierung des Dienstnutzers auch die Autorisierung durch ein Vergebührungssystem (BS1, BS2) überprüft und nur bei positiver Autorisierung bestimmt, daß die Vergebührung von Diensten, die von dem Dienst-Nutzer angefordert werden, von dem Kontroll-Server unterstützt wird.

3. Verfahren nach Anspruch 2, **dadurch gekennzeichnet, daß** der Kontroll-Server (CC1) bei der Überprüfung der Autorisierung durch ein Vergebührungssystem auf einen Server des Vergebührungssystems (BS1, BS2) zugreift.

4. Verfahren nach Anspruch 1, **dadurch gekennzeichnet, daß** der Kontroll-Server (CC1) bei positiver Autorisierung durch einen anderen Kontroll-Server (CC2) bestimmt, daß die Vergebührung von Diensten, die von dem Dienst-Nutzer angefordert werden, von dem Kontroll-Server unterstützt wird.

5. Verfahren nach Anspruch 1, **dadurch gekennzeichnet, daß** die Bestimmung, ob die Vergebührung von Diensten, die von dem Dienst-Nutzer angefordert werden, von dem Kontroll-Server unterstützt wird oder nicht unterstützt wird, bei jeder Anforderung eines Dienstes erfolgt.

6. Verfahren nach Anspruch 1, **dadurch gekennzeichnet, daß** die Bestimmung, ob die Vergebührung von Diensten, die von dem Dienst-Nutzer angefordert werden, von dem Kontroll-Server unterstützt wird oder nicht unterstützt wird, für die Anforderung von zwei oder mehr Diensten gültig ist.

7. Verfahren nach Anspruch 1, **dadurch gekennzeichnet, daß** die Dienst-Anforderungsnachricht und eine oder mehrere auf die Dienst-Anforderungsnachricht ergehenden Rückantworten des Dienst-Servers über einen dem Dienstbetreiber des angeforderten Dienstes zugeordneten Kontroll-Server geleitet werden.

8. Kontroll-Server (CC1, CC2) zur Unterstützung der Vergebührung von Diensten, die einem Dienstnutzer (SU1 bis SU3) von einem Dienst-Server (SS1 bis SS4) erbracht werden,
**dadurch gekennzeichnet, daß** der Kontroll-Server (CC1) mit einer Steuereinheit (CONTR) versehen ist, die so ausgestaltet ist, daß sie eine Prozedur (AUT) zur Authentisierung von Dienst-Nutzern (SU1 bis SU3) durchführt und mittels dem Ergebnis der Prozedur bestimmt, ob die Vergebührung von Diensten, die von einem Dienst-Nutzer angefordert werden, von dem Kontroll-Server unterstützt wird oder nicht unterstützt wird, daß die Steuereinheit (CONTR) weiter so ausgestaltet ist, daß sie überprüft (SC), ob die Rückantwort (ANS1 bis ANS3) eines Dienst-Servers (SS1) auf eine Dienstanforderungsnachricht (REQ5) eines Dienstnutzers (SU1 bis SU3) eine Kennung (PT) beinhaltet, die den angeforderten Dienst als gebührenpflichtig klassifiziert, und daß die Steuereinheit (CONTR) weiter so ausgestaltet ist, daß sie die Erbringung eines von einem Dienstnutzer angeforderten Dienstes unterbindet (SC), wenn der angeforderte Dienst als gebührenpflichtig klassifiziert ist und sie nicht bestimmt hat, daß der Kontroll-Server (CC1) die Vergebührung von Diensten unterstützt, die von diesem Dienst-Nutzer angefordert werden.

9. Kontroll-Server (CC1) nach Anspruch 1, **dadurch gekennzeichnet, daß** die Steuereinheit (CONTR) weiter so ausgestaltet ist, daß sie die Erbringung eines von einem Dienstnutzer angeforderten Dienstes unterbindet (SC), wenn der Dienstnutzer für die Nutzung nicht berechtigt ist oder die für die Nutzung vorausgesetzte Zahlung nicht autorisiert.

10. Kontroll-Server (CC1) nach Anspruch 1, **dadurch gekennzeichnet, daß** die Steuereinheit (CONTR) weiter so ausgestaltet ist, daß sie eine von einem Endgerät (TE1) eines Dienstnutzers (SU1) empfangene Dienst-Anforderungsnachricht (REQ1) an einen Dienst-Server (CC1) weiterleitet.

11. Kontroll-Server (CC1) nach Anspruch 1, **dadurch gekennzeichnet, daß** die Steuereinheit (CONTR) weiter so ausgestaltet ist, daß sie die Prozedur (AUT) zur Authentisierung von Dienst-Nutzern durchführt, wenn die Rückantwort (ANS1 bis ANS3) eines Dienst-Servers (SS1) auf eine Dienstanforderungsnachricht eines Dienstnutzers eine Kennung (PT) beinhaltet, die den angeforderten Dienst als gebührenpflichtig klassifiziert.

12. Kontroll-Server nach Anspruch 1, **dadurch gekennzeichnet, daß** die Steuereinheit (CONTR) weiter so ausgestaltet ist, daß sie für einen Dienst-Nutzer (SU1) einen Autorisierungscode (PAC) ermittelt, wenn sie bestimmt, daß die Vergebührung von Diensten, die von dem Dienst-Nutzer angefordert werden, von dem Kontroll-Server (CC1) unterstützt wird, und daß sie den Autorisierungscode (PAC) an das Endgerät des Dienst-Nutzers übermittelt.

13. Kontroll-Server (CC1) nach Anspruch 1, **dadurch gekennzeichnet, daß** die Steuereinheit (CONTR) weiter so ausgestaltet ist, daß sie den Dienst-Server auffordert, für einen Dienst-Nutzer (SU1) einen Autorisierungscode (PAC) zu ermitteln, wenn sie bestimmt, daß die Vergebührung von Diensten, die von dem Dienst-Nutzer angefordert werden, von dem Kontroll-Server (CC1) unterstützt wird.

14. Kontroll-Server (CC1) nach Anspruch 1, **dadurch gekennzeichnet, daß** die Steuereinheit (CONTR) weiter so ausgestaltet ist, daß sie für einen Dienst-Nutzer (SU1) einen Sessioncode (SC) ermittelt, wenn sie bestimmt, daß die Vergebührung von Diensten, die von dem Dienst-Nutzer angefordert werden, von dem Kontroll-Server unterstützt wird, und daß sie den Sessioncode (SC) an das Endgerät (TE1) des Dienst-Nutzers (SU) übermittelt, und daß die Steuereinheit (CONTR) weiter so ausgestaltet ist, daß sie die Prozedur (AUT) zur Authentisierung von Dienst-Nutzern nicht durchführt, wenn die Rückantwort (ANS1 bis ANS5) eines Dienst-Servers (SS1) auf eine Dienstanforderungsnachricht den Sessioncode (SC) enthält.

15. Kontroll-Server (CC1) nach Anspruch 1, **dadurch gekennzeichnet, daß** die Steuereinheit (CONTR) weiter so ausgestaltet ist, daß sie für einen Dienst-Nutzer (SU1) einen Datensatz mit dienstnutzerspezifischen Daten, insbesondere ein Cookie, ermittelt und an das Endgerät (TE1) des Dienst-Nutzers (SU1) übermittelt.

16. Kontroll-Server (CC1) nach Anspruch 1, **dadurch gekennzeichnet, daß** die Steuereinheit (CONTR) weiter so ausgestaltet ist, daß sie die Erbringung eines von einem Dienstnutzer (SU1) angeforderten Dienstes dadurch unterbindet, daß sie eine Rückantwort (ANS3) des Dienst-Servers (SS1) auf eine Dienstanforderungsnachricht nicht an das Endgerät (TE1) des Dienst-Nutzers (SU1) weiterleitet.
